# EUROPEAN PATENT APPLICATION

(11) **EP 4 450 472 A1**
(43) Date of publication of application: **23.10.2024**
(21) Application number: 22907414.1
(22) Date of filing: 12.12.2022
(51) Int. Cl.: C03C 27/12

(54) **INTERLAYER FILM FOR LAMINATED GLASS AND LAMINATED GLASS**

(30) Priority: 13.12.2021 JP 2021201778
(71) Applicant: SEKISUI CHEMICAL CO., LTD., Osaka-shi Osaka 530-8565 (JP)
(72) Inventor: TAKAI, Minako, Kouka-shi, Shiga 528-8585 (JP); NOHARA, Atsushi, Kouka-shi, Shiga 528-8585 (JP)
(74) Representative: Ter Meer Steinmeister & Partner
(86) International application number: PCT/JP2022/045661
(87) International publication number: WO 2023/112890

(57) **Abstract**

Provided is an interlayer film for laminated glass capable of enhancing the safety for human bodies and environments. An interlayer film for laminated glass according to the present invention is an interlayer film for laminated glass having a one-layer or two or more-layer structure, and contains a thermoplastic resin and an ultraviolet absorber having a value of logKow of 5 or less.

## Description

### TECHNICAL FIELD

The present invention relates to an interlayer film for laminated glass that is used for obtaining laminated glass. Also, the present invention relates to laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

In order to suppress transmission of ultraviolet rays, an interlayer film containing an ultraviolet absorber is sometimes used (for example, Patent Document 1 below).

### Related Art Document

### Patent Document

Patent Document 1: WO2015/059829 A1

### SUMMARY OF THE INVENTION

### PROBLEMS TO BE SOLVED BY THE INVENTION

Conventionally, interlayer films for laminated glass have been produced using materials with consideration of the safety for human bodies and environments. The higher the safety for human bodies and environments, the more it is desired.

It is also an object of the present invention is to provide an interlayer film for laminated glass capable of enhancing the safety for human bodies and environments. It is also an object of the present invention to provide a laminated glass prepared with the interlayer film for laminated glass.

### MEANS FOR SOLVING THE PROBLEMS

According to a broad aspect of the present invention, there is provided an interlayer film for laminated glass (hereinafter, also referred to as interlayer film) having a one-layer or two or more-layer structure, the interlayer film for laminated glass containing a thermoplastic resin, and an ultraviolet absorber having a value of logKow of 5 or less.

In a specific aspect of the interlayer film according to the present invention, the thermoplastic resin is a polyvinyl acetal resin.

In a specific aspect of the interlayer film according to the present invention, the ultraviolet absorber has a molecular weight of 300 or less.

In a specific aspect of the interlayer film according to the present invention, the ultraviolet absorber has a solubility parameter of 21.2 (MPa)^{0.5} or more and 24.0 (MPa)^{0.5} or less.

In a specific aspect of the interlayer film according to the present invention, a content of the ultraviolet absorber in a layer containing the ultraviolet absorber is 0.25 parts by weight or more per 100 parts by weight of the thermoplastic resin in the layer containing the ultraviolet absorber.

In a specific aspect of the interlayer film according to the present invention, the interlayer film contains a plasticizer.

In a specific aspect of the interlayer film according to the present invention, an absolute value of difference between a solubility parameter of the plasticizer and a solubility parameter of the ultraviolet absorber is 15.0 (MPa)^{0.5} or less.

In a specific aspect of the interlayer film according to the present invention, the ultraviolet absorber has a benzotriazole skeleton.

In a specific aspect of the interlayer film according to the present invention, the ultraviolet absorber includes an ultraviolet absorber represented by the following formula (X1).

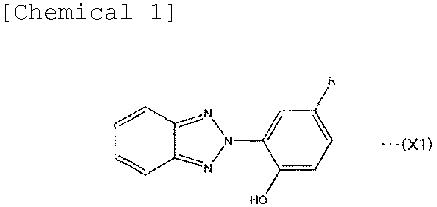

In the above formula (X1), R represents an alkyl group.

In a specific aspect of the interlayer film according to the present invention, the ultraviolet absorber includes an ultraviolet absorber represented by the following formula (X11) or the following formula (X12).

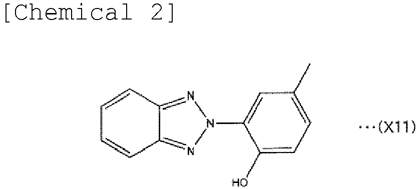

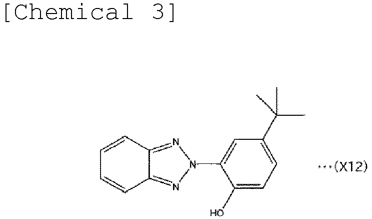

In a specific aspect of the interlayer film according to the present invention, the interlayer film has a maximum value of transmittance at a wavelength of 300 nm or more and 350 nm or less of 0.1% or less.

In a specific aspect of the interlayer film according to the present invention, the interlayer film has an ultraviolet transmittance Tuv of 0.4% or less.

In a specific aspect of the interlayer film according to the present invention, the interlayer film has a yellow index YI of 0.5 or less.

In a specific aspect of the interlayer film according to the present invention, the interlayer film has a haze of 8% or less.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

The interlayer film for laminated glass according to the present invention has a one-layer structure or a two or more-layer structure. The interlayer film for laminated glass according to the present invention includes a thermoplastic resin, and an ultraviolet absorber having a value of logKow of 5 or less. Since the interlayer film for laminated glass according to the present invention has the above configuration, it is possible to enhance the safety for human bodies and environments.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODES FOR CARRYING OUT THE INVENTION

Hereinafter, the details of the present invention will be described.

### (Interlayer film for laminated glass)

The interlayer film for laminated glass (in the present specification, sometimes abbreviated as "interlayer film") according to the present invention is used for laminated glass.

The interlayer film according to the present invention has a one-layer structure or a two or more-layer structure. The interlayer film according to the present invention may have a one-layer structure and may have a two or more-layer structure. The interlayer film according to the present invention may have a two-layer structure, may have a two or more-layer structure, may have a three-layer structure, and may have a three or more-layer structure. The interlayer film according to the present invention may include only a first layer. The interlayer film according to the present invention may include, a first layer, and a second layer arranged on a first surface side of the first layer. The interlayer film according to the present invention may include a first layer, a second layer arranged on a first surface side of the first layer, and a third layer arranged on a second surface side opposite to the first surface of the first layer. The interlayer film according to the present invention may be a single-layered interlayer film and may be a multi-layered interlayer film. The structure of the interlayer film according to the present invention may partially vary. For example, the interlayer film according to the present invention may have a part having a one-layer structure, and a part having a multi-layer structure.

The interlayer film according to the present invention contains a thermoplastic resin, and an ultraviolet absorber having a value of logKow of 5 or less (in the present specification, also abbreviated as "ultraviolet absorber (X)") . Therefore, the interlayer film according to the present invention contains a thermoplastic resin, and ultraviolet absorber (X).

Conventionally, interlayer films have been produced using materials that pay attention to the safety for human bodies and environments. The present inventors focused on an ultraviolet absorber among ingredients contained in conventional interlayer films, and found a configuration of ultraviolet absorber capable of enhancing the safety for human bodies and environments in comparison with conventional interlayer films. That is, since the interlayer film according to the present invention has the above configuration, it is possible to enhance the safety for human bodies and environments. In the interlayer film according to the present invention, since an ultraviolet absorber having a value of logKow of 5 or less (ultraviolet absorber (X)) is used, it is possible to reduce the risk of environmental pollution, and the risk of accumulation in human and other organisms in comparison with the case where only an ultraviolet absorber having a value of logKow exceeding 5 is used.

It is preferred that the interlayer film include a layer containing a thermoplastic resin and ultraviolet absorber (X). When the interlayer film is a single-layered interlayer film having a one-layer structure, the interlayer film includes only the first layer containing a thermoplastic resin and ultraviolet absorber (X). When the interlayer film is a multi-layered interlayer film having a two or more-layer structure, it is preferred that the interlayer film include at least one layer containing a thermoplastic resin and ultraviolet absorber (X). When the interlayer film is a multi-layered interlayer film having a two or more-layer structure, it is more preferred that at least one surface layer of the interlayer film be a layer containing a thermoplastic resin and ultraviolet absorber (X), and it is further preferred that two surface layers of the interlayer film be layers containing a thermoplastic resin and ultraviolet absorber (X). When the interlayer film is a multi-layered interlayer film having a two or more-layer structure, it is more preferred that the second layer be a surface layer of the interlayer film, and the second layer be a layer containing ultraviolet absorber (X). When the interlayer film is a multi-layered interlayer film having a three or more-layer structure, it is more preferred that the third layer be a surface layer of the interlayer film, and the third layer be a layer containing ultraviolet absorber (X). When the interlayer film is a multi-layered interlayer film having a two or more-layer structure, it is most preferred that all layers of the interlayer film be layers containing a thermoplastic resin and ultraviolet absorber (X) .

Hereinafter, specific embodiments of the present invention will be described with reference to the drawings.

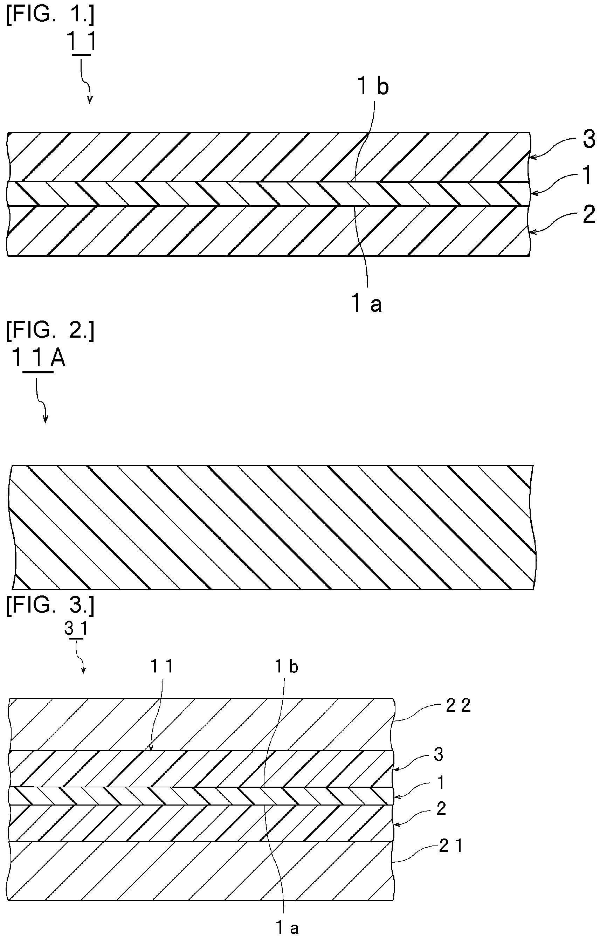

Fig. 1 is a sectional view schematically showing an interlayer film for laminated glass in accordance with a first embodiment of the present invention. In Fig. 1, a section in the thickness direction of an interlayer film 11 is shown.

The interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 includes a first layer 1, a second layer 2, and a third layer 3. The second layer 2 is arranged on a first surface 1a of the first layer 1 to be layered thereon. The third layer 3 is arranged on a second surface 1b opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

The first layer 1 contains a thermoplastic resin and ultraviolet absorber (X). The second layer 2 contains a thermoplastic resin and ultraviolet absorber (X). The third layer 3 contains a thermoplastic resin and ultraviolet absorber (X). In the interlayer film 11, each layer provided in the interlayer film 11 contains a thermoplastic resin and ultraviolet absorber (X).

In this connection, other layers may be arranged between the second layer 2 and the first layer 1 and between the first layer 1 and the third layer 3, respectively. Examples of other layers include a layer containing polyethylene terephthalate and the like. It is preferred that the second layer 2 and the first layer 1, and the first layer 1 and the third layer 3 be directly layered, respectively.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass. The interlayer film 11A contains a thermoplastic resin and ultraviolet absorber (X).

Hereinafter, the details of the first layer, the second layer and the third layer which constitute the interlayer film according to the present invention, and the details of each ingredient contained in the first layer, the second layer and the third layer will be described.

### <Ultraviolet absorber having value of logKow of 5 or less (ultraviolet absorber (X))>

The interlayer film contains ultraviolet absorber (X). The interlayer film includes a layer containing ultraviolet absorber (X). Ultraviolet absorber (X) is an ultraviolet absorber having a value of logKow of 5 or less. It is preferred that the first layer contain ultraviolet absorber (X). It is preferred that the second layer contain ultraviolet absorber (X). It is preferred that the third layer contain ultraviolet absorber (X). One kind of ultraviolet absorber (X) may be used alone, and two or more kinds thereof may be used in combination. Ultraviolet absorber (X) contained in the first layer, ultraviolet absorber (X) contained in the second layer, and ultraviolet absorber (X) contained in the third layer may be the same or different from each other.

"logKow" means octanol/water partition coefficient. In the present invention, a value of logKow means a value calculated by using software of "Version4.11" of "EPI Suite". "EPI Suite" is an estimation tool that predicts and calculates a physical property value of each chemical substance on the basis of the structure of the chemical substance. "EPI Suite" is available on the Internet.

The value of logKow of ultraviolet absorber (X) is 5 or less, preferably 4.8 or less, more preferably 4.5 or less. The smaller the value of logKow of ultraviolet absorber (X), the more the safety for human bodies and environments can be enhanced. The value of logKow of ultraviolet absorber (X) may be 0 or more, and may be 1 or more.

A molecular weight of ultraviolet absorber (X) is preferably 100 or more, more preferably 150 or more, and is preferably 300 or less, more preferably 280 or less. When the molecular weight of ultraviolet absorber (X) is the above lower limit or more and the above upper limit or less, the value of logKow tends to be small, so that the safety for human bodies and environments can be further enhanced.

A solubility parameter (SP value) of ultraviolet absorber (X) is preferably 21.2 (MPa)^{0.5} or more, more preferably 21.3 (MPa)^{0.5} or more, and is preferably 24.0 (MPa)^{0.5} or less, more preferably 23.8 (MPa)^{0.5} or less. When the solubility parameter (SP value) of ultraviolet absorber (X) is the above lower limit or more and the above upper limit or less, it is possible to make compatibility between ultraviolet absorber (X) and a thermoplastic resin, and compatibility between ultraviolet absorber (X) and a plasticizer excellent.

Solubility parameter (SP value) of ultraviolet absorber (X) means a value calculated by using HSP analysis software "HSPiP". "HSPiP" is an estimation tool that predicts and calculates a physical property value of each chemical substance on the basis of the structure of the chemical substance using a Hansen solubility parameter.

It is preferred that ultraviolet absorber (X) have a benzotriazole skeleton. In this case, it is possible to further enhance the ultraviolet absorptivity.

It is preferred that ultraviolet absorber (X) include an ultraviolet absorber represented by the following formula (X1). In this case, the value of logKow tends to be small, so that the safety for human bodies and environments can be further enhanced. Also, it is possible to further enhance the ultraviolet absorptivity.

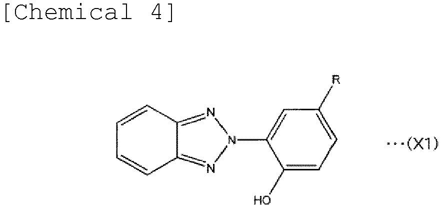

In the above formula (X1), R represents an alkyl group.

In the above formula (X1), R may be an alkyl group not having a branched structure, and may be an alkyl group having a branched structure.

In the above formula (X1), the number of carbon atoms of the alkyl group which is R is preferably 1 or more, preferably 10 or less, more preferably 4 or less. When the number of carbon atoms of the alkyl group is the above lower limit or more and the above upper limit or less, the value of logKow tends to be small, so that the safety for human bodies and environments can be further enhanced. Also, it is possible to further enhance the ultraviolet absorptivity. In the above formula (X1), the alkyl group which is R is preferably a methyl group or a t-butyl group. In this case, the value of logKow further tends to be small, so that the safety for human bodies and environments can be further enhanced. Also, it is possible to further enhance the ultraviolet absorptivity.

It is preferred that ultraviolet absorber (X) include an ultraviolet absorber represented by the following formula (X11) or the following formula (X12). In this case, the value of logKow further tends to be small, so that the safety for human bodies and environments can be further enhanced. Also, it is possible to further enhance the ultraviolet absorptivity.

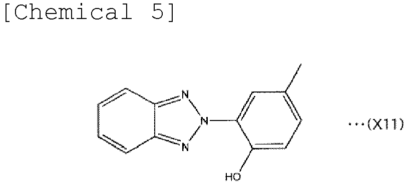

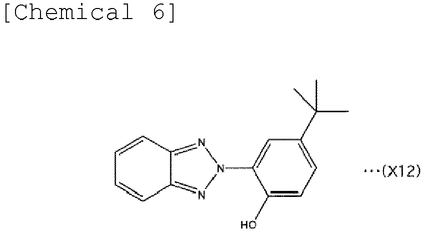

Examples of commercially available products of ultraviolet absorber (X) include "Tinuvin P" and "Tinuvin PS" available from BASF Japan Ltd., "JF-77" available from Jouhoku Chemical Industry, "LA-32" available from ADEKA CORPORATION, "Sumisorb 200" available from Sumitomo Chemical Co., Ltd., "Eversorb 71" available from Everlight Chemical Industrial Corp., "Viosorb 520" and "Viosorb 105" available from KYODO CHEMICAL CO., LTD, and so on.

In 100% by weight of a layer containing ultraviolet absorber (X) (a first layer, a second layer, or a third layer), a content of ultraviolet absorber (X) is preferably 0.2% by weight or more, more preferably 0.4% by weight or more, further preferably 0.6% by weight or more, especially preferably 0.8% by weight or more and is preferably 7% by weight or less, more preferably 6% by weight or less, further preferably 5% by weight or less, especially preferably 4% by weight or less. When the content of ultraviolet absorber (X) is the above lower limit or more, it is possible to further reduce the ultraviolet transmittance Tuv of the interlayer film, and also it is possible to further suppress deterioration in visible light transmittance even after long-term use of the interlayer film and the laminated glass. In particular, by setting the content of ultraviolet absorber (X) to 0.2% by weight or more in 100% by weight of a layer containing ultraviolet absorber (X), it is possible to significantly suppress deterioration in visible light transmittance even after long-term use of the interlayer film and the laminated glass. When the content of ultraviolet absorber (X) is the above upper limit or less, it is possible to further enhance the dispersibility of ultraviolet absorber (X) in the layer containing ultraviolet absorber (X).

In 100% by weight of the interlayer film, the content of ultraviolet absorber (X) is preferably 0.2% by weight or more, more preferably 0.4% by weight or more, further preferably 0.6% by weight or more, especially preferably 0.8% by weight or more and is preferably 7% by weight or less, more preferably 6% by weight or less, further preferably 5% by weight or less, especially preferably 4% by weight or less. When the content of ultraviolet absorber (X) is the above lower limit or more, it is possible to further reduce the ultraviolet transmittance Tuv of the interlayer film, and also it is possible to further suppress deterioration in visible light transmittance even after long-term use of the interlayer film and the laminated glass. In particular, by setting the content of ultraviolet absorber (X) to 0.2% by weight or more in 100% by weight of the interlayer film, it is possible to significantly suppress deterioration in visible light transmittance even after long-term use of the interlayer film and the laminated glass. When the content of ultraviolet absorber (X) is the above upper limit or less, it is possible to further enhance the dispersibility of ultraviolet absorber (X) in the interlayer film.

Relative to 100 parts by weight of the thermoplastic resin in a layer containing ultraviolet absorber (X) (a first layer, a second layer, or a third layer), a content of ultraviolet absorber (X) in the layer containing the ultraviolet absorber (X) is preferably 0.1 parts by weight or more, more preferably 0.2 parts by weight or more, further preferably 0.25 parts by weight or more, especially preferably 0.3 parts by weight or more, most preferably 0.5 parts by weight or more, and is preferably 3 parts by weight or less, more preferably 2.5 parts by weight or less, further preferably 2 parts by weight or less. When the content of ultraviolet absorber (X) is the above lower limit or more, it is possible to further reduce the ultraviolet transmittance Tuv of the interlayer film, and also it is possible to further suppress deterioration in visible light transmittance even after long-term use of the interlayer film and the laminated glass. When the content of ultraviolet absorber (X) is the above upper limit or less, it is possible to further enhance the dispersibility of ultraviolet absorber (X) in the layer containing ultraviolet absorber (X).

The layer containing the ultraviolet absorber represented by the above formula (X11) is referred to as layer (X11). Relative to 100 parts by weight of the thermoplastic resin in layer (X11) (a first layer, a second layer, or a third layer), a content of the ultraviolet absorber represented by the above formula (X11) in the layer (X11) is preferably 0.47 parts by weight or more, more preferably 0.55 parts by weight or more, further preferably 0.68 parts by weight or more, and is preferably 3 parts by weight or less, more preferably 2.5 parts by weight or less, further preferably 2 parts by weight or less. When the content of the ultraviolet absorber represented by the above formula (X11) is the above lower limit or more, it is possible to further reduce the ultraviolet transmittance Tuv of the interlayer film, and also it is possible to further suppress deterioration in visible light transmittance even after long-term use of the interlayer film and the laminated glass. In particular, when the content of the ultraviolet absorber represented by the above formula (X11) is 0.47 parts by weight or more, it is possible to make ultraviolet transmittance Tuv of the interlayer film be 0.4% or less. When the content of the ultraviolet absorber represented by the above formula (X11) is the above upper limit or less, it is possible to further enhance the dispersibility of the ultraviolet absorber in the layer including the layer (X11).

The layer containing the ultraviolet absorber represented by the above formula (X12) is referred to as layer (X12). Relative to 100 parts by weight of the thermoplastic resin in layer (X12) (a first layer, a second layer, or a third layer), a content of the ultraviolet absorber represented by the above formula (X12) in the layer (X12) is preferably 0.77 parts by weight or more, more preferably 0.88 parts by weight or more, further preferably 1.12 parts by weight or more, and is preferably 3 parts by weight or less, more preferably 2.5 parts by weight or less, further preferably 2 parts by weight or less. When the content of the ultraviolet absorber represented by the above formula (X12) is the above lower limit or more, it is possible to further reduce the ultraviolet transmittance Tuv of the interlayer film, and also it is possible to further suppress deterioration in visible light transmittance even after long-term use of the interlayer film and the laminated glass. In particular, when the content of the ultraviolet absorber represented by the above formula (X12) is 0.77 parts by weight or more, it is possible to make ultraviolet transmittance Tuv of the interlayer film be 0.4% or less. When the content of the ultraviolet absorber represented by the above formula (X12) is the above upper limit or less, it is possible to further enhance the dispersibility of the ultraviolet absorber in the layer including the layer (X12).

### (Thermoplastic resin)

The interlayer film contains a thermoplastic resin (hereinafter, sometimes described as a thermoplastic resin (0)). It is preferred that the interlayer film contain a polyvinyl acetal resin (hereinafter, sometimes described as a polyvinyl acetal resin (0)) as the thermoplastic resin (0). It is preferred that the first layer contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). It is preferred that the layer containing ultraviolet absorber (X) contain a thermoplastic resin (hereinafter, sometimes described as a thermoplastic resin (4)). It is preferred that the layer containing ultraviolet absorber (X) contain a polyvinyl acetal resin (hereinafter, sometimes described as a polyvinyl acetal resin (4)) as the thermoplastic resin (4). The thermoplastic resin (1), the thermoplastic resin (2), the thermoplastic resin (3), and the thermoplastic resin (4) may be the same or different from one another. For still higher sound insulating property, it is preferred that the thermoplastic resin (1) be different from the thermoplastic resin (2) and the thermoplastic resin (3). Each of the polyvinyl acetal resin (1), the polyvinyl acetal resin (2), the polyvinyl acetal resin (3), and the polyvinyl acetal resin (4) may be the same or different from one another. For still higher sound insulating property, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), the thermoplastic resin (3), and the thermoplastic resin (4) may be used alone and two or more kinds thereof may be used in combination. One kind of each of the polyvinyl acetal resin (0), the polyvinyl acetal resin (1), the polyvinyl acetal resin (2), the polyvinyl acetal resin (3), and the polyvinyl acetal resin (4) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a (meth)acrylic resin, a polyolefin resin, an ionomer resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of the laminated glass is further enhanced. When the average polymerization degree is the aforementioned upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde having 1 to 10 carbon atoms is suitably used. Examples of the aldehyde having 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin (0) is preferably 15% by mole or more, more preferably 18% by mole or more and is preferably 40% by mole or less, more preferably 35% by mole or less. When the content of the hydroxyl group is the above lower limit or more, the adhesive force of the interlayer film is further enhanced. Moreover, when the content of the hydroxyl group is the aforementioned upper limit or less, the flexibility of the interlayer film is enhanced and the handling of the interlayer film is facilitated.

A content of the hydroxyl group (the amount of hydroxyl groups) of the polyvinyl acetal resin (1) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating property of laminated glass is further enhanced. Moreover, when the content of the hydroxyl group is the aforementioned upper limit or less, the flexibility of the interlayer film is enhanced and the handling of the interlayer film is facilitated.

A preferred range of the content of the hydroxyl group of the polyvinyl acetal resin (4) when the layer containing ultraviolet absorber (X) is not a surface layer of the interlayer film, is the same as a preferred range of the content of the hydroxyl group of the polyvinyl acetal resin (1) .

The content of the hydroxyl group (hydroxyl group amount) of the polyvinyl acetal resin (2) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. The content of the hydroxyl group (hydroxyl group amount) of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the aforementioned upper limit or less, the flexibility of the interlayer film is enhanced and the handling of the interlayer film is facilitated.

A preferred range of the content of the hydroxyl group of the polyvinyl acetal resin (4) when the layer containing ultraviolet absorber (X) is a surface layer of the interlayer film, is the same as a preferred range of the content of the hydroxyl group of the polyvinyl acetal resin (2) and the polyvinyl acetal resin (3).

From the viewpoint of further enhancing the sound insulating property, it is preferred that the content of the hydroxyl group of the polyvinyl acetal resin (1) be lower than the content of the hydroxyl group of the polyvinyl acetal resin (2). From the viewpoint of further enhancing the sound insulating property, it is preferred that the content of the hydroxyl group of the polyvinyl acetal resin (1) be lower than the content of the hydroxyl group of the polyvinyl acetal resin (3). An absolute value of difference between the content of the hydroxyl group of the polyvinyl acetal resin (1) and the content of the hydroxyl group of the polyvinyl acetal resin (2) is defined as absolute value A, and an absolute value of difference between the content of the hydroxyl group of the polyvinyl acetal resin (1) and the content of the hydroxyl group of the polyvinyl acetal resin (3) is defined as absolute value B. From the viewpoint of further enhancing the sound insulating property, each of the absolute value A and the absolute value B is preferably 1% by mole or more, more preferably 5% by mole or more, further preferably 9% by mole or more, especially preferably 10% by mole or more, most preferably 12% by mole or more. Each of the absolute value A and the absolute value B is preferably 20% by mole or less.

When the layer containing ultraviolet absorber (X) is not a surface layer of the interlayer film, from the viewpoint of further enhancing the sound insulating property, it is preferred that the content of the hydroxyl group of the polyvinyl acetal resin (4) be lower than the content of the hydroxyl group of the polyvinyl acetal resin (2). When the layer containing ultraviolet absorber (X) is not a surface layer of the interlayer film, from the viewpoint of further enhancing the sound insulating property, it is preferred that the content of the hydroxyl group of the polyvinyl acetal resin (4) be lower than the content of the hydroxyl group of the polyvinyl acetal resin (3). An absolute value of difference between the content of the hydroxyl group of the polyvinyl acetal resin (4) and the content of the hydroxyl group of the polyvinyl acetal resin (2) is defined as absolute value C, and an absolute value of difference between the content of the hydroxyl group of the polyvinyl acetal resin (4) and the content of the hydroxyl group of the polyvinyl acetal resin (3) is defined as absolute value D. From the viewpoint of further enhancing the sound insulating property, each of the absolute value C and the absolute value D is preferably 1% by mole or more, more preferably 5% by mole or more, further preferably 9% by mole or more, especially preferably 10% by mole or more, most preferably 12% by mole or more. Each of the absolute value C and the absolute value D is preferably 20% by mole or less.

When the layer containing ultraviolet absorber (X) is a surface layer of the interlayer film, from the viewpoint of further enhancing the sound insulating property, it is preferred that the content of the hydroxyl group of the polyvinyl acetal resin (1) be lower than the content of the hydroxyl group of the polyvinyl acetal resin (4). When the layer containing ultraviolet absorber (X) is a surface layer of the interlayer film, from the viewpoint of still further enhancing the sound insulating property, the absolute value of difference between the content of the hydroxyl group of the polyvinyl acetal resin (1) and the content of the hydroxyl group of the polyvinyl acetal resin (4) is preferably 1% by mole or more, more preferably 5% by mole or more, further preferably 9% by mole or more, especially preferably 10% by mole or more, most preferably 12% by mole or more. An absolute value of difference between the content of the hydroxyl group of the polyvinyl acetal resin (1) and the content of the hydroxyl group of the polyvinyl acetal resin (4) is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced. In particular, when the acetylation degree of the polyvinyl acetal resin (1) is 0.1% by mole or more and is 25% by mole or less, the resulting laminated glass is excellent in penetration resistance.

A preferred range of the acetylation degree of the polyvinyl acetal resin (4) when the layer containing ultraviolet absorber (X) is not a surface layer of the interlayer film, is the same as a preferred range of the acetylation degree of the polyvinyl acetal resin (1).

The acetylation degree (acetyl group amount) of each of the polyvinyl acetal resin (2) and the polyvinyl acetal resin (3) is preferably 0.01% by mole or more, more preferably 0.5% by mole or more, and is preferably 10% by mole or less, more preferably 2% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced.

A preferred range of the acetylation degree of the polyvinyl acetal resin (4) when the layer containing ultraviolet absorber (X) is a surface layer of the interlayer film, is the same as a preferred range of the acetylation degree of the polyvinyl acetal resin (2) and the polyvinyl acetal resin (3).

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more, more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the aforementioned upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more, more preferably 60% by mole or more, and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the aforementioned upper limit or less, the reaction time required for producing the polyvinyl acetal resin is shortened.

A preferred range of the acetalization degree of the polyvinyl acetal resin (4) when the layer containing ultraviolet absorber (X) is not a surface layer of the interlayer film, is the same as a preferred range of the acetalization degree of the polyvinyl acetal resin (1).

The acetalization degree of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the aforementioned upper limit or less, the reaction time required for producing the polyvinyl acetal resin is shortened.

A preferred range of the acetalization degree of the polyvinyl acetal resin (4) when the layer containing ultraviolet absorber (X) is a surface layer of the interlayer film, is the same as a preferred range of the acetalization degree of the polyvinyl acetal resin (2) and the polyvinyl acetal resin (3).

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the interlayer film, the content of the polyvinyl acetal resin is preferably 100% by weight or less. It is preferred that the main ingredient (50% by weight or more) of the thermoplastic resin of the interlayer film be a polyvinyl acetal resin.

In 100% by weight of the thermoplastic resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first layer, the content of the polyvinyl acetal resin is preferably 100% by weight or less. It is preferred that the main ingredient (50% by weight or more) of the thermoplastic resin of the first layer be a polyvinyl acetal resin.

In 100% by weight of the thermoplastic resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second layer, the content of the polyvinyl acetal resin is preferably 100% by weight or less. It is preferred that the main ingredient (50% by weight or more) of the thermoplastic resin of the second layer be a polyvinyl acetal resin.

In 100% by weight of the thermoplastic resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the third layer, the content of the polyvinyl acetal resin is preferably 100% by weight or less. It is preferred that the main ingredient (50% by weight or more) of the thermoplastic resin of the third layer be a polyvinyl acetal resin.

In 100% by weight of the thermoplastic resin contained in the layer containing ultraviolet absorber (X), the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the layer containing ultraviolet absorber (X), the content of the polyvinyl acetal resin is preferably 100% by weight or less. It is preferred that the main ingredient (50% by weight or more) of the thermoplastic resin in the layer containing ultraviolet absorber (X) be a polyvinyl acetal resin.

### (Plasticizer)

From the viewpoint of further enhancing the adhesive force of an interlayer film, it is preferred that the interlayer film according to the present invention contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). It is preferred that the layer containing ultraviolet absorber (X) contain a plasticizer (hereinafter, sometimes described as a plasticizer (4)). When the thermoplastic resin contained in the interlayer film is a polyvinyl acetal resin, it is especially preferred that the interlayer film (each layer) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

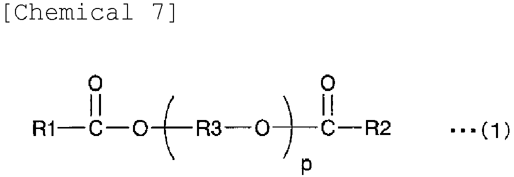

In the formula (1), R1 and R2 each represent an organic group having 2 to 10 carbon atoms, R3 represents an ethylene group, an isopropylene group, or an n-propylene group, and p represents an integer of 3 to 10. R1 and R2 in the formula (1) each are preferably an organic group having 5 to 10 carbon atoms, and more preferably an organic group having 6 to 10 carbon atoms.

A solubility parameter (SP value) of the plasticizer is preferably 10 (MPa)^{0.5} or more, more preferably 16 (MPa)^{0.5} or more, and is preferably 25 (MPa)^{0.5} or less, more preferably 17 (MPa)^{0.5} or less. When the solubility parameter (SP value) of the plasticizer is the above lower limit or more and the above upper limit or less, it is possible to make compatibility between ultraviolet absorber (X) and a plasticizer excellent.

The solubility parameter of the plasticizer may be larger than or may be smaller than the solubility parameter of the ultraviolet absorber (X). The solubility parameter of the plasticizer may be the same as the solubility parameter of ultraviolet absorber (X).

The solubility parameter of the plasticizer in the layer containing the ultraviolet absorber (X) may be larger than or may be smaller than the solubility parameter of the ultraviolet absorber (X) in the layer containing the ultraviolet absorber (X). The solubility parameter of the plasticizer in the layer containing the ultraviolet absorber (X) may be the same as the solubility parameter of ultraviolet absorber (X) in the layer containing the ultraviolet absorber (X).

An absolute value of difference between solubility parameter of the plasticizer and solubility parameter of the ultraviolet absorber (X) is preferably 15.0 (MPa)^{0.5} or less, more preferably 10 (MPa)^{0.5} or less, further preferably 7 (MPa)^{0.5} or less. When the absolute value of difference is the above upper limit or less, it is possible to make compatibility between ultraviolet absorber (X) and a plasticizer excellent.

An absolute value of difference between solubility parameter of the plasticizer in the layer containing the ultraviolet absorber (X), and solubility parameter of the ultraviolet absorber (X) in the layer containing the ultraviolet absorber (X) is preferably 15.0 (MPa)^{0.5} or less, more preferably 10 (MPa)^{0.5} or less, further preferably 7 (MPa)^{0.5} or less. When the absolute value of difference is the above upper limit or less, it is possible to make compatibility between ultraviolet absorber (X) and a plasticizer excellent.

Solubility parameter (SP value) of the plasticizer means a value calculated by using HSP analysis software "HSPiP". "HSPiP" is an estimation tool that predicts and calculates a physical property value of each chemical substance on the basis of the structure of the chemical substance using a Hansen solubility parameter.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the interlayer film, the content of the plasticizer (0) per 100 parts by weight of the thermoplastic resin (0) is defined as content (0). The content (0) is preferably 5 parts by weight or more, more preferably 25 parts by weight or more, further preferably 30 parts by weight or more, and is preferably 100 parts by weight or less, more preferably 60 parts by weight or less, further preferably 50 parts by weight or less. When the content (0) is the above lower limit or more, the penetration resistance of the laminated glass is further enhanced. When the content (0) is the above upper limit or less, the transparency of the interlayer film is further enhanced.

In the first layer, the content of the plasticizer (1) relative to 100 parts by weight of the thermoplastic resin (1) is referred to as content (1). The content (1) is preferably 50 parts by weight or more, more preferably 55 parts by weight or more, further preferably 60 parts by weight or more. The content (1) is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

When the layer containing ultraviolet absorber (X) is not a surface layer of the interlayer film, a preferred range of the content of the plasticizer (4) relative to 100 parts by weight of the thermoplastic resin (4) (hereinafter, sometimes described as content (4)) is the same with a preferred range of the content (1) in the layer containing ultraviolet absorber (X).

In the second layer, the content of the plasticizer (2) per 100 parts by weight of the thermoplastic resin (2) is referred to as a content (2). In the third layer, the content of the plasticizer (3) relative to 100 parts by weight of the thermoplastic resin (3) is referred to as content (3). Each of the content (2) and the content (3) is preferably 5 parts by weight or more, more preferably 10 parts by weight or more, still more preferably 15 parts by weight or more, further preferably 20 parts by weight or more, especially preferably 24 parts by weight or more, and most preferably 25 parts by weight or more. Each of the content (2) and the content (3) is preferably 45 parts by weight or less, more preferably 40 parts by weight or less, further preferably 35 parts by weight or less, especially preferably 32 parts by weight or less, and most preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of the laminated glass is further enhanced.

When the layer containing ultraviolet absorber (X) is a surface layer of the interlayer film, a preferred range of the content of the plasticizer (4) relative to 100 parts by weight of the thermoplastic resin (4) (hereinafter, sometimes described as content (4)) is the same with a preferred range of the content (2) and the content (3) in the layer containing ultraviolet absorber (X).

For the purpose of enhancing the sound insulating property of the laminated glass, it is preferred that the content (1) be larger than the content (2) and it is preferred that the content (1) be larger than the content (3) .

When the layer containing ultraviolet absorber (X) is not a surface layer of the interlayer film, for the purpose of enhancing the sound insulating property of laminated glass, it is preferred that the content (4) be larger than the content (2) and it is preferred that the content (4) be larger than the content (3).

When the layer containing ultraviolet absorber (X) is a surface layer of the interlayer film, for the purpose of enhancing the sound insulating property of laminated glass, it is preferred that the content (1) be larger than the content (4).

From the viewpoint of further enhancing the sound insulating property of the laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

When the layer containing ultraviolet absorber (X) is not a surface layer of the interlayer film, from the viewpoint of further enhancing the sound insulating property of laminated glass, each of the absolute value of difference between the content (2) and the content (4) and the absolute value of difference between the content (3) and the content (4) is preferably 10 parts by weight or more, more preferably 15 parts by weight or more, and further preferably 20 parts by weight or more. Each of the absolute value of difference between the content (2) and the content (4) and the absolute value of difference between the content (3) and the content (4) is preferably 80 parts by weight or less, more preferably 75 parts by weight or less, further preferably 70 parts by weight or less.

When the layer containing ultraviolet absorber (X) is a surface layer of the interlayer film, from the viewpoint of further enhancing the sound insulating property of laminated glass, the absolute value of difference between the content (4) and the content (1) is preferably 10 parts by weight or more, more preferably 15 parts by weight or more, further preferably 20 parts by weight or more. The absolute value of difference between the content (4) and the content (1) is preferably 80 parts by weight or less, more preferably 75 parts by weight or less, further preferably 70 parts by weight or less.

### (Heat shielding substance)

It is preferred that the interlayer film contain a heat shielding substance. It is preferred that the first layer contain a heat shielding substance. It is preferred that the second layer contain a heat shielding substance. It is preferred that the third layer contain a heat shielding substance. It is preferred that the layer containing ultraviolet absorber (X) contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

### Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. It is preferred that the layer containing ultraviolet absorber (X) contain the Ingredient X. The Ingredient X is a heat shielding substance. One kind of the Ingredient X may be used alone and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atom(s) or copper atom(s). It is preferred that the Ingredient X contain vanadium atom(s) and it is also preferred that the Ingredient X contain copper atom(s). It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of a layer containing the Ingredient X (a first layer, a second layer, a third layer, or a layer containing ultraviolet absorber (X) the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, a third layer, or a layer containing ultraviolet absorber (X)), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. It is preferred that the layer containing ultraviolet absorber (X) contain the heat shielding particles. The heat shielding particles are a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particles be particles of a metal oxide (metal oxide particles).

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: Cs_{0.33}WO₃.

The average particle diameter of the heat shielding particles is preferably 0.01 um or more, more preferably 0.02 µm or more, and is preferably 0.1 um or less, more preferably 0.05 um or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, a third layer, or a layer containing ultraviolet absorber (X)), the content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, a third layer, or a layer containing ultraviolet absorber (X)), the content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### (Metal salt)

It is preferred that the interlayer film contain at least one kind of metal salt (hereinafter, sometimes described as Metal salt M) of alkali metal salts and alkali earth metal salts. It is preferred that the first layer contain the Metal salt M. It is preferred that the second layer contain the Metal salt M. It is preferred that the third layer contain the Metal salt M. It is preferred that the layer containing ultraviolet absorber (X) contain the Metal salt M. The alkali earth metal means six metals of Be, Mg, Ca, Sr, Ba, and Ra. Use of the Metal salt M facilitates controlling of the adhesivity between the interlayer film and a lamination glass member such as a glass plate or the adhesivity between layers in the interlayer film. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt M contained in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate having 2 to 16 carbon atoms and the potassium carboxylate having 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in an interlayer film containing the Metal salt M or a layer containing the Metal salt M (a first layer, a second layer, a third layer, or a layer containing ultraviolet absorber (X)) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member (e.g., glass plate) or the adhesivity between layers in the interlayer film can be further well controlled.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. It is preferred that the layer containing ultraviolet absorber (X) contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the interlayer film and laminated glass, in order to maintain high visible light transmittance thereof over a long period of time, the content of the oxidation inhibitor is preferably 0.03% by weight or more, more preferably 0.1% by weight or more in 100% by weight of the interlayer film or in 100% by weight of the layer containing the oxidation inhibitor (a first layer, a second layer, a third layer, or a layer containing ultraviolet absorber (X)). Moreover, since an effect commensurate with the addition of an oxidation inhibitor is not attained, it is preferred that the content of the oxidation inhibitor be 2% by weight or less in 100% by weight of the interlayer film or in 100% by weight of a layer containing the oxidation inhibitor.

### (Other ingredients)

Each of the interlayer film, the first layer, the second layer, the third layer and the layer containing ultraviolet absorber (X) may contain other ingredients than the above-described ingredients as necessary. Examples of other ingredients include an ultraviolet absorber other than ultraviolet absorber (X), a coloring agent (pigment and dye and the like), a coupling agent, a dispersant, a surfactant, a fire retardant, an antistatic agent, an adhesion adjusting agent other than metal salt, a moisture-proofing agent, a fluorescent brightener, and an infrared absorber, and the like. One kind of these other ingredients may be used alone, and two or more kinds thereof may be used in combination.

### (Other details of interlayer film for laminated glass)

The maximum value of transmittance at a wavelength of 300 nm or more and 350 nm or less of the interlayer film is preferably 0.1% or less, more preferably 0.01% or less, further preferably 0.001% or less, especially preferably 0.00001% or less. When the maximum value of transmittance is the above upper limit or less, the visible light transmittance becomes still less likely to deteriorate even after long-term use of the interlayer film and the laminated glass. The maximum value of transmittance at a wavelength of 300 nm or more and 350 nm or less of the interlayer film may be 0% or more.

The transmittance of the interlayer film at a wavelength of 390 nm is preferably 10% or more, more preferably 15% or more, and is preferably 40% or less, more preferably 35% or less. When the transmittance is the above lower limit or more, it is possible to further enhance the visible light transmittance. When the transmittance is the above upper limit or less, the visible light transmittance becomes still less likely to deteriorate even after long-term use of the interlayer film and the laminated glass.

Transmittance at a wavelength of 300 nm or more and 350 nm or less and transmittance at a wavelength of 390 nm of the interlayer film can be measured in the following manner. The interlayer film is arranged between two sheets of 2.5-mm-thick clear glass conforming to JIS R3202:1996 to obtain a laminated glass A. Transmittance at a wavelength of 300 nm or more and 350 nm or less and transmittance at a wavelength of 390 nm of the obtained laminated glass A are measured. Transmittance at a wavelength of 300 nm or more and 350 nm or less and transmittance at a wavelength of 390 nm in the laminated glass A are respectively defined as transmittance at a wavelength of 300 nm or more and 350 nm or less and transmittance at a wavelength of 390 nm in the interlayer film. The transmittance can be measured using a spectrophotometer ("U-4150" available from Hitachi High-Tech Science Corporation) in accordance with JIS R3211:1998.

Ultraviolet transmittance Tuv of the interlayer film is preferably 0.4% or less, more preferably 0.25% or less, further preferably 0.1% or less. When the ultraviolet transmittance Tuv is the above upper limit or less, the visible light transmittance becomes still less likely to deteriorate even after long-term use of the interlayer film and the laminated glass. Ultraviolet transmittance Tuv of the interlayer film may be 0% or more.

Ultraviolet transmittance Tuv of the interlayer film can be measured in the following manner. The interlayer film is arranged between two sheets of 2.5-mm-thick clear glass conforming to JIS R3202:1996 to obtain a laminated glass A. Transmittance at a wavelength of 300 nm or more and 400 nm or less of the obtained laminated glass A is measured. A value calculated from transmittance at a wavelength of 300 nm or more and 400 nm or less of the laminated glass A in a method conforming to ISO9050 is defined as ultraviolet transmittance Tuv of the interlayer film. The ultraviolet transmittance Tuv can be measured using a spectrophotometer ("U-4150" available from Hitachi High-Tech Science Corporation) in accordance with JIS R3211:1998.

Yellow index YI of the interlayer film is preferably 0.5 or less, more preferably 0.45 or less, further preferably 0.4 or less. When the yellow index YI of the interlayer film is the above upper limit or less, the visible light transmittance becomes still less likely to deteriorate even after long-term use of the interlayer film and the laminated glass. The yellow index YI of the interlayer film may be 0.01 or more, and may be 0.05 or more.

Yellow index YI of the interlayer film is a yellow index calculated from total light transmittance. Yellow index YI in the interlayer film can be measured in the following manner. The interlayer film is arranged between two sheets of 2.5-mm-thick clear glass conforming to JIS R3202:1996 to obtain a laminated glass A. Total light transmittance of the obtained laminated glass A is measured. From total light transmittance of the laminated glass A, yellow index YI of the laminated glass A is calculated in accordance with JIS K7373. Yellow index YI of the laminated glass A is defined as yellow index YI of the interlayer film.

The total light transmittance of the laminated glass A is measured in the following manner.

The laminated glass A is placed parallel with the normal line of the light axis on the optical path between the light source and the integrating sphere at a position where the laminated glass is in contact with the integrating sphere so that only the transmitted light is received by the integrating sphere with a spectrophotometer. The total light transmittance means a visible light transmittance calculated from the spectral transmittance measured in this condition. The total light transmittance can be measured using a spectrophotometer ("U-4150" available from Hitachi High-Tech Science Corporation).

Haze of the interlayer film is preferably 8% or less, more preferably 5% or less, further preferably 3% or less. When the haze is the above upper limit or less, it is possible to enhance the transparency of the interlayer film and the laminated glass. The haze of the interlayer film may be 0% or more, and may be 0.1% or more.

Haze of the interlayer film can be measured in the following manner. The interlayer film is arranged between two sheets of 2.5-mm-thick clear glass conforming to JIS R3202:1996 to obtain a laminated glass A. Haze of obtained laminated glass A is measured with a haze meter in accordance with JIS K6714. Haze of laminated glass A is defined as haze of the interlayer film.

The method for preparing the laminated glass A is not particularly limited. One example of the method for preparing the laminated glass A is shown below.

The interlayer film is sandwiched between two sheets of 2.5-mm-thick clear glass conforming to JIS R3202:1996 to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain the laminated glass A.

In preparation of a laminated glass product using the interlayer film according to the present invention, 2.5-mm-thick clear glass conforming to JIS R3202:1996 may be used, and clear glass other than the 2.5-mm-thick clear glass conforming to JIS R3202:1996 may be used, and a lamination glass member other than clear glass may be used.

The interlayer film has one end and the other end being at an opposite side of the one end. The one end and the other end are both end parts facing each other in the interlayer film.

The interlayer film may be an interlayer film in which the thickness of the one end and the thickness of the other end are the same, or may be an interlayer film in which the thickness of the other end is larger than the thickness of the one end. The interlayer film may be an interlayer film having a uniform thickness, or may be an interlayer film having varying thickness. The sectional shape of the interlayer film may be a rectangular shape or may be a wedge-like shape.

The maximum thickness of the interlayer film is preferably 0.1 mm or more, more preferably 0.25 mm or more, further preferably 0.5 mm or more, especially preferably 0.8 mm or more, and is preferably 3.8 mm or less, more preferably 2.0 mm or less, further preferably 1.5 mm or less.

From the viewpoint of the practical aspect and the viewpoint of sufficiently enhancing the adhesive strength and the penetration resistance, the maximum thickness of a surface layer of the interlayer film is preferably 0.001 mm or more, more preferably 0.2 mm or more, further preferably 0.3 mm or more, and is preferably 1.0 mm or less, more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, further preferably 0.2 mm or more and is preferably 0.8 mm or less, more preferably 0.6 mm or less, further preferably 0.3 mm or less.

The distance between one end and the other end of the interlayer film is preferably 3.0 m or less, more preferably 2.0 m or less, especially preferably 1.5 m or less, and is preferably 0.5 m or more, more preferably 0.8 m or more, especially preferably 1.0 m or more.

The interlayer film may be wound to be formed into a roll body of the interlayer film. The roll body may include a winding core and an interlayer film wound on the outer periphery of the winding core.

The method for producing the interlayer film is not particularly limited. In the case of a single-layered interlayer film, examples of the production method of the interlayer film include a method of extruding a resin composition with an extruder. One exemplary method for forming the interlayer film in the case of a multi-layered interlayer film includes separately forming layers by using resin compositions for forming respective layers, and then layering the obtained layers. Further, as a method for producing the interlayer film, a method of layering layers by co-extruding resin compositions for forming respective layers using an extruder can be recited. A production method of extrusion-molding is preferred because the method is suitable for continuous production.

For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

It is preferred that the interlayer film not have a light control film. Absence of a light control film in the interlayer film can make haze of the interlayer film be the aforementioned upper limit or less.

### (Laminated glass)

A laminated glass according to the present invention includes a first lamination glass member, a second lamination glass member and the interlayer film described above. In the laminated glass according to the present invention, the interlayer film is arranged between the first lamination glass member and the second lamination glass member.

Fig. 3 is a sectional view schematically showing an example of laminated glass prepared with the interlayer film for laminated glass shown in Fig. 1.

A laminated glass 31 shown in Fig. 3 includes a first lamination glass member 21, a second lamination glass member 22 and the interlayer film 11. The interlayer film 11 is arranged between the first lamination glass member 21 and the second lamination glass member 22 to be sandwiched therebetween.

The first lamination glass member 21 is layered on a first surface of the interlayer film 11. The second lamination glass member 22 is layered on a second surface opposite to the first surface of the interlayer film 11. The first lamination glass member 21 is layered on an outer surface of the second layer 2. The second lamination glass member 22 is layered on an outer surface of the third layer 3.

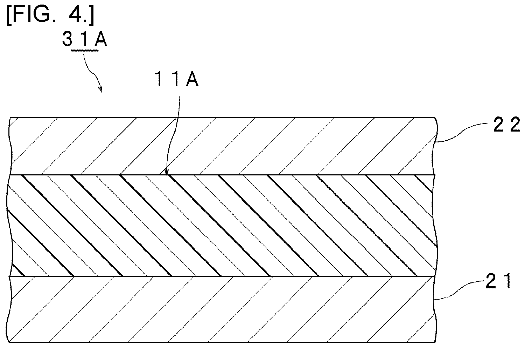

Fig. 4 is a sectional view schematically showing an example of laminated glass prepared with the interlayer film for laminated glass shown in Fig. 2.

A laminated glass 31A shown in Fig. 4 includes the first lamination glass member 21, the second lamination glass member 22 and the interlayer film 11A. The interlayer film 11A is arranged between the first lamination glass member 21 and the second lamination glass member 22 to be sandwiched therebetween.

The first lamination glass member 21 is layered on a first surface of the interlayer film 11A. The second lamination glass member 22 is layered on a second surface opposite to the first surface of the interlayer film 11A.

The laminated glass may be a head-up display. When the laminated glass is a head-up display, the laminated glass has a display region of the head-up display. The display region is a region on which information can be favorably displayed.

A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials were prepared.

### (Thermoplastic resin)

Polyvinyl acetal resin (polyvinyl butyral resin, average polymerization degree of 1700, content of hydroxyl group of 30% by mole, acetylation degree of 1% by mole, acetalization degree (butyralization degree) of 69% by mole))

Polyvinyl acetal resin (polyvinyl butyral resin, average polymerization degree of 3000, content of hydroxyl group of 22% by mole, acetylation degree of 13% by mole, acetalization degree (butyralization degree) of 65% by mole))

Polyvinyl acetal resin (polyvinyl butyral resin, average polymerization degree of 1700, content of hydroxyl group of 30.5% by mole, acetylation degree of 1% by mole, acetalization degree (butyralization degree) of 68.5% by mole))

### (Plasticizer)

Triethylene glycol di-2-ethylhexanoate (3GO)

### (Ultraviolet absorber)

### Ultraviolet absorber (X):

Ultraviolet absorber represented by the above formula (X11) ("Tinuvin P" available from BASF Japan Ltd.)
Ultraviolet absorber represented by the above formula (X12) ("Tinuvin PS" available from BASF Japan Ltd.)
2,2',4,4'-tetrahydroxybenzophenone ("Viosorb 105" available from KYODO CHEMICAL CO., LTD.)

Ultraviolet absorber not corresponding to ultraviolet absorber (X):
2-[2-hydroxy-3,5-bis(α,α-dimethylbenzyl)phenyl]-2H-benzotriazole ("Tinuvin 234" available from BASF Japan Ltd.)
2-(2'-hydroxy-5'-tert-octylphenyl)benzotriazole ("JF-83" available from Jouhoku Chemical Industry)

A value of logKow and solubility parameter (SP value) of each ultraviolet absorber are shown in Table.

### (Metal salt M)

Mg mixture (50 : 50 (weight ratio) mixture of magnesium 2-ethylbutyrate and magnesium acetate)

### (Oxidation inhibitor)

BHT (2,6-di-t-butyl-p-cresol)

### (Example 1)

### Preparation of composition for forming interlayer film:

The following ingredients were mixed, and kneaded sufficiently with a mixing roll to obtain a composition for forming an interlayer film.

Polyvinyl butyral resin (average polymerization degree: 1700, content of hydroxyl group: 30% by mole, acetylation degree: 1% by mole, acetalization degree: 69% by mole): 100 parts by weight
Triethylene glycol di-2-ethylhexanoate (3GO): 40 parts by weight
Ultraviolet absorber represented by the above formula (X11): 0.47 parts by weight
Metal salt M in an amount that gives a magnesium amount of 70 ppm in the obtained interlayer film
Oxidation inhibitor (BHT) in an amount of 0.2% by weight in the obtained interlayer film

### Preparation of interlayer film:

By extruding a composition for forming an interlayer film with an extruder, a single-layered interlayer film (thickness: 760 um) having only the first layer was prepared.

### Preparation of laminated glass:

The obtained interlayer film was sandwiched between two sheets of 2.5-mm thick clear glass (300 mm long × 300 mm wide) conforming to JIS R3202:1996 to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass. The obtained laminated glass corresponds to the aforementioned laminated glass A.

### (Examples 2, 3 and Comparative Examples 1, 2)

A single-layered interlayer film (thickness: 760 um) was prepared in the same manner as that in Example 1 except that the kind and the content of the ultraviolet absorber were changed to those shown in Table 1. Regarding the Metal salt M and the oxidation inhibitor, the same kind and the same blending amount as those in Example 1 were used.

### (Example 4)

### Preparation of resin composition for forming first layer:

The following ingredients were mixed, and kneaded sufficiently with a mixing roll to obtain a composition for forming a first layer.

Polyvinyl butyral resin (average polymerization degree: 3000, content of hydroxyl group: 22% by mole, acetylation degree: 13% by mole, acetalization degree: 65% by mole): 100 parts by weight
Triethylene glycol di-2-ethylhexanoate (3GO): 40 parts by weight
Ultraviolet absorber represented by the above formula (X11): 0.47 parts by weight
Mg mixture in an amount that gives a magnesium amount of 0.038 parts by weight (Mg mixture in an amount that gives a magnesium amount of 60 ppm in the obtained first layer)
Oxidation inhibitor (BHT) in an amount of 0.2% by weight in the obtained first layer

### Preparation of resin composition for forming second layer and third layer:

The following ingredients were mixed, and kneaded sufficiently with a mixing roll to obtain a resin composition for forming a second layer and a third layer.

Polyvinyl butyral resin (average polymerization degree: 1700, content of hydroxyl group: 30.5% by mole, acetylation degree: 1% by mole, acetalization degree: 68.5% by mole) 100 parts by weight
Triethylene glycol di-2-ethylhexanoate (3GO): 40 parts by weight
Ultraviolet absorber represented by the above formula (X11): 0.47 parts by weight
Mg mixture in an amount that gives a magnesium amount of 0.038 parts by weight (Mg mixture in an amount that gives a magnesium amount of 60 ppm in the obtained second and third layers)
Oxidation inhibitor (BHT) in an amount of 0.2% by weight in the obtained second layer and third layers

### Preparation of interlayer film:

By coextruding the resin composition for forming a first layer and the resin composition for forming a second layer and a third layer using a coextruder, an interlayer film (760 um in thickness) having a three-layer structure (second layer/first layer/third layer) was obtained.

### Preparation of laminated glass:

Laminated glass was obtained in the same manner as that in Example 1 except that the obtained interlayer film was used. The obtained laminated glass corresponds to the aforementioned laminated glass A.

### (Example 5)

An interlayer film having three-layered structure (second layer/first layer/third layer) (thickness: 760 um) was prepared in the same manner as that in Example 4 except that the kind and the content of the ultraviolet absorber were changed to those shown in Table 2. Regarding the Metal salt M and the oxidation inhibitor, the same kind and the same blending amount as those in Example 4 were used.

### (Evaluation)

### (1) Transmittance of interlayer film at wavelength of 300 nm or more and 350 nm or less

By measuring transmittance at a wavelength of 300 nm or more and 350 nm or less of the obtained laminated glass (laminated glass A) using a spectrophotometer ("U-4150" available from Hitachi High-Tech Corporation) according to the above-described method, the maximum value of transmittance at a wavelength of 300 nm or more and 350 nm or less of the interlayer film was determined.

### (2) Transmittance of interlayer film at wavelength of 390 nm

By measuring transmittance at a wavelength of 390 nm of the obtained laminated glass (laminated glass A) using a spectrophotometer ("U-4150" available from Hitachi High-Tech Corporation) according to the above-described method, transmittance at a wavelength of 390 nm of the interlayer film was determined.

### (3) Ultraviolet transmittance Tuv of interlayer film

By measuring transmittance at a wavelength of 300 nm or more and 400 nm or less of the obtained laminated glass (laminated glass A) using a spectrophotometer ("U-4150" available from Hitachi High-Tech Corporation) according to the above-described method, ultraviolet transmittance Tuv of the interlayer film was determined.

### (4) Yellow index YI of interlayer film

By measuring total light transmittance of the obtained laminated glass (laminated glass A) using a spectrophotometer ("U-4150" available from Hitachi High-Tech Corporation) according to the above-described method, yellow index YI of the interlayer film was determined.

### (5) Haze of interlayer film

By measuring haze of the obtained laminated glass (laminated glass A) according to JIS K6714 using a haze meter ("TC-HIIIDPK" available from TokyoDenshoku co., Ltd.) by the method as described above, haze of the interlayer film was determined.

### (6) Safety for human bodies and environments

In the interlayer film obtained in Examples 1 to 5, since an ultraviolet absorber (ultraviolet absorber (X)) having a value of logKow of 5 or less is used, it is possible to keep the risk of environmental pollution low, and it is possible to enhance the safety for human bodies and environments. In Table, evaluation results of Examples 1 to 5 in which ultraviolet absorber (X) is used are indicated by "o", and evaluation results of Comparative Examples 1, 2 in which an ultraviolet absorber having a value of logKow exceeding 5 is used are indicated by .

Configurations of interlayer films and results are shown in the following Tables 1, 2. In Table, "E" in measurement results of transmittance means multiplier of 10. For example, "1.6E-02" means "1.6 × 10⁻².

**[Table 1]**

| | | | | Example 1 | Example 2 | Example 3 | Comparative Example 1 | Comparative Example 2 |
|---|---|---|---|---|---|---|---|---|
| Interlayer film | Number of layers | | - | 1 | 1 | 1 | 1 | 1 |
| | Thermoplastic resin | Kind | - | PVB | PVB | PVB | PVB | PVB |
| | | Content | parts by weight | 100 | 100 | 100 | 100 | 100 |
| | Plasticizer | Kind | - | 3GO | 3GO | 3GO | 3GO | 3GO |
| | | Solubility parameter (SP value) | (MPa)^{0.5} | 16.9 | 16.9 | 16.9 | 16.9 | 16.9 |
| | | Content | parts by weight | 40 | 40 | 40 | 40 | 40 |
| | Ultraviolet absorber | Kind | - | TinuvinP | TinuvinPS | Viosorb105 | Tinuvin234 | JF-83 |
| | | Value of logKow | - | 4.31 | 4.36 | 2.78 | 7.67 | 6.21 |
| | | Solubility parameter (SP value) | (MPa)^{0.5} | 23.8 | 21.3 | 32.1 | 17 | 19.6 |
| | | Content | parts by weight | 0.47 | 0.77 | 0.47 | 0.47 | 0.47 |
| | Absolute value of difference between SP value of plasticizer and SP value of ultraviolet absorber | | (MPa)^{0.5} | 6.9 | 4.4 | 15.2 | 0.1 | 2.7 |
| | Thickness of interlayer film | | µm | 760 | 760 | 760 | 760 | 760 |
| Evaluation | Transmittance of interlayer film | Maximum value at a wavelength of 300 nm or more and 350 nm or less | % | 1.6E-02 | 2.8E-02 | 1.9E-02 | 1.9E-02 | 2.8E-01 |
| | | Wavelength 390 nm | % | 48.2 | 49.3 | 20.4 | 20.4 | 55.1 |
| | Ultraviolet transmittance Tuv of interlayer film | | % | 0.378 | 0.392 | 0.004 | 0.034 | 1.063 |
| | Yellow index YI of interlayer film | | - | 0.3 | 0.3 | 42.1 | 0.2 | 0.2 |
| | Haze of interlayer film | | % | 0.26 | 0.23 | 0.25 | 0.26 | 0.23 |
| | Safety for human bodies and environments | | - | ○ | ○ | ○ | × | × |

**[Table 2]**

| | | | | Example 4 | Example 5 |
|---|---|---|---|---|---|
| Number of layers | | | - | 3 | 3 |
| First layer | Thermoplastic resin | Kind | - | PVB | PVB |
| | | Content | parts by weight | 100 | 100 |
| | Plasticizer | Kind | - | 3GO | 3GO |
| | | Solubility parameter (SP value) | (MPa)^{0.5} | 16.9 | 16.9 |
| | | Content | parts by weight | 40 | 40 |
| | Ultraviolet absorber | Kind | - | TinuvinP | TinuvinPS |
| | | Value of logKow | - | 4.31 | 4.36 |
| | | Solubility parameter (SP value) | (MPa)^{0.5} | 23.8 | 21.3 |
| | | Content | parts by weight | 0.47 | 0.68 |
| | Absolute value of difference between SP value of plasticizer and SP value of ultraviolet absorber | | (MPa)^{0.5} | 6.9 | 4.4 |
| Second and third layers | Thermoplastic resin | Kind | - | PVB | PVB |
| | | Content | parts by weight | 100 | 100 |
| | Plasticizer | Kind | - | 3GO | 3GO |
| | | Solubility parameter (SP value) | (MPa)^{0.5} | 16.9 | 16.9 |
| | | Content | parts by weight | 40 | 40 |
| | Ultraviolet absorber | Kind | - | TinuvinP | TinuvinPS |
| | | Value of logKow | - | 4.31 | 4.36 |
| | | Solubility parameter (SP value) | (MPa)^{0.5} | 23.8 | 21.3 |
| | | Content | parts by weight | 0.47 | 0.68 |
| Thickness of interlayer film | | | µm | 760 | 760 |
| Evaluation | Transmittance of interlayer film | Maximum value at a wavelength of 300 nm or more and 350 nm or less | % | 1.6E-02 | 2.8E-02 |
| | | Wavelength 390 nm | % | 48.2 | 49.2 |
| | Ultraviolet transmittance Tuv of interlayer film | | % | 0.376 | 0.391 |
| | Yellow index YI of interlayer film | | - | 0.3 | 0.4 |
| | Haze of interlayer film | | % | 0.28 | 0.25 |
| | Safety for human bodies and environments | | - | ○ | ○ |

### EXPLANATION OF SYMBOLS

1: First layer
1a: First surface
1b: Second surface
2: Second layer
3: Third layer
11, 11A: Interlayer film
21: First lamination glass member
22: Second lamination glass member
31, 31A: Laminated glass

## Claims

1. An interlayer film for laminated glass having a one-layer or two or more-layer structure,
the interlayer film for laminated glass containing a thermoplastic resin and an ultraviolet absorber having a value of logKow of 5 or less.

2. The interlayer film for laminated glass according to claim 1, wherein the thermoplastic resin is a polyvinyl acetal resin.

3. The interlayer film for laminated glass according to claim 1 or 2, wherein the ultraviolet absorber has a molecular weight of 300 or less.

4. The interlayer film for laminated glass according to any one of claims 1 to 3, wherein the ultraviolet absorber has a solubility parameter of 21.2 (MPa)^{0.5} or more and 24.0 (MPa)^{0.5} or less.

5. The interlayer film for laminated glass according to any one of claims 1 to 4, wherein a content of the ultraviolet absorber in a layer containing the ultraviolet absorber is 0.25 parts by weight or more per 100 parts by weight of the thermoplastic resin in the layer containing the ultraviolet absorber.

6. The interlayer film for laminated glass according to any one of claims 1 to 5, containing a plasticizer.

7. The interlayer film for laminated glass according to claim 6, wherein an absolute value of difference between a solubility parameter of the plasticizer and a solubility parameter of the ultraviolet absorber is 15.0 (MPa) ^{0.5} or less.

8. The interlayer film for laminated glass according to any one of claims 1 to 7, wherein the ultraviolet absorber has a benzotriazole skeleton.

9. The interlayer film for laminated glass according to any one of claims 1 to 8, wherein the ultraviolet absorber includes an ultraviolet absorber represented by formula (X1) below: 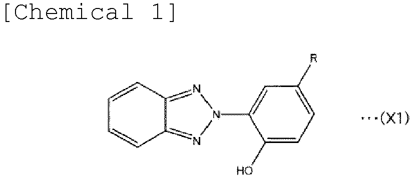 in the above formula (X1), R represents an alkyl group.

10. The interlayer film for laminated glass according to any one of claims 1 to 9, wherein the ultraviolet absorber includes an ultraviolet absorber represented by formula (X11) below or formula (X12) below:

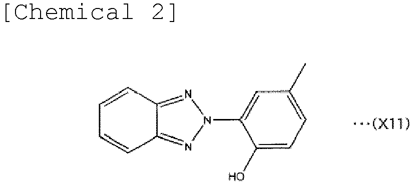

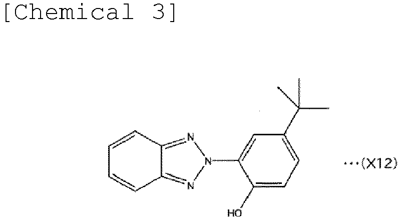

11. The interlayer film for laminated glass according to any one of claims 1 to 10, wherein the interlayer film has a maximum value of transmittance at a wavelength of 300 nm or more and 350 nm or less of 0.1% or less.

12. The interlayer film for laminated glass according to any one of claims 1 to 11, wherein the interlayer film has an ultraviolet transmittance Tuv of 0.4% or less.

13. The interlayer film for laminated glass according to any one of claims 1 to 12, wherein the interlayer film has a yellow index YI of 0.5 or less.

14. The interlayer film for laminated glass according to any one of claims 1 to 13, wherein the interlayer film has a haze of 8% or less.

15. A laminated glass, comprising:
a first lamination glass member;
a second lamination glass member; and
the interlayer film for laminated glass according to any one of claims 1 to 14,
the interlayer film for laminated glass being arranged between the first lamination glass member and the second lamination glass member.
